(19) Europäisches Patentamt / European Patent Office / Office européen des brevets

(11) **EP 3 839 558 A1**

(12) **EUROPÄISCHE PATENTANMELDUNG**

(43) Veröffentlichungstag:
**23.06.2021 Patentblatt 2021/25**

(51) Int Cl.:
**G01S 7/497** (2006.01)   **G01S 17/42** (2006.01)
**G01S 17/931** (2020.01)

(21) Anmeldenummer: **20212617.3**

(22) Anmeldetag: **09.12.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(30) Priorität: **20.12.2019   DE 102019135570**

(71) Anmelder: **Carl Zeiss AG**
**73447 Oberkochen (DE)**

(72) Erfinder:
• **Höller, Frank**
  **73434 Aalen (DE)**
• **Wollweber, Thomas**
  **06648 Eckartsberga (DE)**
• **Horn, Jan**
  **80636 München (DE)**
• **Westphal, Peter**
  **07743 Jena (DE)**

(74) Vertreter: **Ostertag & Partner Patentanwälte mbB**
**Epplestraße 14**
**70597 Stuttgart (DE)**

(54) **VERFAHREN ZUM BETREIBEN EINES LIDAR-SYSTEMS, SOWIE LIDAR-SYSTEM**

(57) Die Erfindung betrifft ein Verfahren und eine Vorrichtung zum Betreiben eines LIDAR-Systems, sowie ein LIDAR-System, wobei das LIDAR-System wenigstens eine spektral durchstimmbare Lichtquelle (410) zum Aussenden wenigstens eines Lichtstrahls mit zeitlich variierender Frequenz und eine Auswerteeinrichtung (460) zur Ermittlung von Abstandswerten des Objekts (440) basierend auf Schwebungsfrequenzen von jeweils aus einer Überlagerung von aus dem Lichtstrahl hervorgegangenen, an dem Objekt reflektierten Teilsignalen (421) mit nicht an dem Objekt (440) reflektierten Referenzsignalen (422) resultierenden Schwebungssignalen aufweist, wobei ein Abstandswert jeweils als Peak in einem anhand einer Fouriertransformation des Schwebungssignals erhaltenen Signalspektrum bestimmbar ist. Ein Verfahren zum Betreiben eines solchen LIDAR-Systems zur scannenden Abstandsermittlung eines Objekts weist folgende Schritte auf: Analysieren des Signalspektrums in einem vorgegebenen Analyse-Frequenzbereich, wobei eine diesen Analyse-Frequenzbereich begrenzende obere Grenzfrequenz kleiner als die in dem von der Auswerteeinrichtung (460) zur Ermittlung von Abstandswerten des Objekts (440) ausgewerteten Signalspektrum auftretende Maximalfrequenz ist; und Automatisches Modifizieren des Betriebs des LIDAR-Systems in Abhängigkeit von dem Ergebnis der Analyse.

## Fig. 1

EP 3 839 558 A1

**Beschreibung**

Gebiet der Erfindung

Die Erfindung betrifft ein Verfahren und eine Vorrichtung zum Betreiben eines LIDAR-Systems, sowie ein LIDAR-System. Das LIDAR-System kann zur Ermittlung von Abständen sowohl bewegter als auch unbewegter Objekte und insbesondere zur Ermittlung der Topographie bzw. Form eines räumlich ausgedehnten dreidimensionalen Objekts verwendet werden.

Stand der Technik

Zur optischen Abstandsmessung von Objekten ist u.a. ein auch als LIDAR bezeichnetes Messprinzip bekannt, bei welchem ein optisches Signal zu dem betreffenden Objekt hin ausgestrahlt und nach an dem Objekt erfolgter Rückreflexion ausgewertet wird. In der Praxis kommen sowohl laufzeitbasierte Messsysteme (TOF-LIDAR-Messsysteme, TOF = "**t**ime **o**f **f**light"), bei denen direkt die Laufzeit des Laserlichts zum jeweiligen Objekt und zurück gemessen wird, als auch FMCW-LIDAR-Messsysteme mit Verwendung eines frequenzmodulierten FMCW-Lasers (FMCW= "**f**requency-**m**odulated **c**ontinuous **w**ave") zum Einsatz.

Ein in der Praxis auftretendes Problem ist, dass ein LIDAR-System je nach Einsatzszenario erheblichen Umweltbelastungen ausgesetzt ist. Bei Anwendung z.B. im Straßenverkehr kann das LIDAR-System durch eine für die Arbeitswellenlänge hinreichend transparente Frontscheibe (z.B. ein Scheinwerferglas bei Unterbringung im Scheinwerfer) zwar als solche gegen Umweltbelastungen geschützt sein. Jedoch kann eine Verschmutzung bzw. Beschädigung der besagten Frontscheibe selbst durch Schmutzpartikel oder Steinschlag oder auch durch Niederschläge wie Regen, Schnee oder Eis auftreten mit der Folge, dass eine korrekte Signalerfassung und eine zuverlässige Abstandsermittlung von Objekten nicht mehr gegeben sind. Gegebenenfalls kann in Phasen, in welchen kein reflektiertes Messsignal durch die LIDAR-Vorrichtung erfasst wird, nicht unterschieden werden, ob dies auf das Nicht-Vorhandensein von hinsichtlich ihres Abstandes zu vermessenden Objekten oder aber auf eine Verschmutzung der Frontscheibe zurückzuführen ist.

Entsprechende Abhilfemaßnahmen z.B. in Form von Reinigungs- oder Abtauvorgängen gehen in der Regel mit einer Beeinträchtigung der eigentlichen Funktionalität des LIDAR-Systems einher und erfordern daher typischerweise eine Betriebsunterbrechung des LIDAR-Systems.

Mögliche Ansätze für eine - auch im Hinblick auf die Minimierung solcher Betriebsunterbrechungen wünschenswerte - kontinuierliche Überwachung etwa des Verschmutzungsgrades der o.g. Frontscheibe beinhalten den Einsatz zusätzlicher geeigneter Sensoren (z.B. in Form von Regensensoren oder kamerabasierten Sensoren), gehen jedoch mit einer Erhöhung des apparativen Aufwandes einher. Zudem besteht grundsätzlich das Risiko, dass an solchen zusätzlichen Sensoren selbst Störungen oder Defekte auftreten mit der Folge, dass z.B. ein Reinigungsprozess nicht rechtzeitig eingeleitet wird.

Zum Stand der Technik wird lediglich beispielhaft auf DE 10 2005 054 497 A1 und DE 10 2004 028 860 A1 verwiesen.

ZUSAMMENFASSUNG DER ERFINDUNG

Vor dem obigen Hintergrund ist es eine Aufgabe der vorliegenden Erfindung, ein Verfahren zum Betreiben eines LIDAR-Systems sowie ein LIDAR-System bereitzustellen, welche eine frühzeitige Erkennung und ggf. Beseitigung von verschmutzungs- oder witterungsbedingten Funktionsstörungen mit geringerem apparativen Aufwand ermöglichen.

Diese Aufgabe wird durch das Verfahren gemäß den Merkmalen des unabhängigen Patentanspruchs 1 bzw. das LIDAR-System gemäß den Merkmalen des nebengeordneten Patentanspruchs 10 gelöst.

Ein erfindungsgemäßes Verfahren zum Betreiben eines LIDAR-Systems zur scannenden Abstandsermittlung eines Objekts, wobei das LIDAR-System wenigstens eine spektral durchstimmbare Lichtquelle zum Aussenden wenigstens eines Lichtstrahls mit zeitlich variierender Frequenz und eine Auswerteeinrichtung zur Ermittlung von Abstandswerten des Objekts basierend auf Schwebungsfrequenzen von jeweils aus einer Überlagerung von aus dem Lichtstrahl hervorgegangenen, an dem Objekt reflektierten Teilsignalen mit nicht an dem Objekt reflektierten Referenzsignalen resultierenden Schwebungssignalen aufweist, wobei ein Abstandswert jeweils als Peak in einem anhand einer Fouriertransformation des Schwebungssignals erhaltenen Signalspektrum bestimmbar ist, weist folgende Schritte auf:

- Analysieren des Signalspektrums in einem vorgegebenen Analyse-Frequenzbereich, wobei eine diesen Analyse-Frequenzbereich begrenzende obere Grenzfrequenz kleiner als die in dem von der Auswerteeinrichtung (460) zur Ermittlung von Abstandswerten des Objekts (440) ausgewerteten Signalspektrum auftretende Maximalfrequenz ist; und

- Automatisches Modifizieren des Betriebs des LIDAR-Systems in Abhängigkeit von dem Ergebnis der Analyse.

Gemäß einer Ausführungsform ist die den Analyse-Frequenzbereich begrenzende obere Grenzfrequenz nicht größer als 2MHz, insbesondere nicht größer als 1MHz. Dabei kann die den Analyse-Frequenzbereich begrenzende obere Grenzfrequenz insbesondere in Abhängigkeit von der im jeweiligen Anwendungsfall gegebenen Geometrie, insbesondere der durch die Geometrie bedingten kleinstmöglichen Objektentfernung, gewählt werden. Des Weiteren kann der Analyse-Frequenzbereich z.B. durch den Abstand einer (Front- bzw. Schutz-) Scheibe vorgegeben sein, durch welche etwa das LIDAR-System gegen Umweltbelastungen geschützt ist und die für die Arbeitswellenlänge hinreichend transparent ist.

Der vorliegenden Erfindung liegt insbesondere das Konzept zugrunde, bei der Abstandsermittlung in einem FMCW-LIDAR-System unter Verwendung eines frequenzmodulierten FMCW-Lasers (FMCW= "frequency-modulated continuous wave") eine automatische Modifizierung des Betriebs des LIDAR-Systems (etwa im Wege der Durchführung oder Planung einer Reinigungs- oder Abtaumaßnahme) in Abhängigkeit von einer Analyse des Signalspektrums selbst, welches anhand einer Fourier-Transformation des Schwebungssignals erhalten wird, vorzunehmen.

Hierbei geht die Erfindung von der Überlegung aus, dass die Position bzw. der Abstand z.B. der vorstehend genannten Frontscheibe oder einer anderen z.B. zum Schutz des LIDAR-Systems vorhandenen Komponente bekannt sind, wobei zudem dieser Abstand im Vergleich zu typischen zu erfassenden Objektabständen gering ist. Auf besagter Komponente bzw. Frontscheibe vorhandene Partikel wie z.B. Schmutzpartikel oder Niederschlag können somit grundsätzlich ebenfalls in besagtem Signalspektrum als Peak nachgewiesen werden.

Von dieser Überlegung ausgehend beinhaltet die Erfindung nun insbesondere das Konzept, durch Analyse des Signalspektrums in einem speziellen Frequenzbereich (typischerweise mit vergleichsweise geringen Frequenzen von größenordnungsmäßig 1 MHz) eine Diagnose des Verschmutzungsgrades (oder Vereisungsgrades etc.) durchzuführen und in Abhängigkeit von dieser Analyse automatisch entsprechende Abhilfemaßnahmen und/oder eine Betriebsunterbrechung des LIDAR-Systems einzuleiten. Die Erfindung macht sich dabei insbesondere auch den Umstand zunutze, dass mit einem FMCW-LIDAR-Messsystem zugleich mehrere Distanzen bzw. Objektabstände ermittelt werden können, da jeder dieser Distanzen jeweils ein eigener Peak im Signalspektrum, welches aus einer Fouriertransformation des Schwebungssignals erhalten wird, entspricht.

Lediglich beispielhaft kann etwa der Abstand einer Front- bzw. Schutzscheibe zum Scanner des LIDAR-Systems in der Größenordnung 10 cm liegen. Geht man weiter davon aus, dass ein Objektabstand von 150 m einer Schwebungsfrequenz von 1 GHz entspricht, liegen typische, dem Abstand der Frontscheibe bzw. darauf befindlicher Schmutzpartikel entsprechende Schwebungsfrequenzen in der Größenordnung von (1-2) MHz, so dass der für die Diagnose des Verschmutzungsgrades zu analysierende Frequenzbereich des Signalspektrums (als Analysebereich) vom eigentlichen "Suchbereich" (d.h. dem für die eigentliche Abstandsmessung von Objekten relevanten Frequenzbereich des Signalspektrums) unterschieden bzw. bei der Auswertung getrennt werden kann.

Dadurch, dass für die erfindungsgemäße Analyse z.B. des Verschmutzungsgrades bzw. die automatische Einleitung geeigneter Abhilfemaßnahmen das durch Fourier-Transformation des Schwebungssignals ohnehin zu ermittelnde Signalspektrum herangezogen wird, kann insbesondere auf den Einsatz zusätzlicher (Verschmutzungs- oder Vereisungs-) Sensoren verzichtet (und es können die mit einem solchen Einsatz verbundenen Kosten vermieden) werden.

Die Erfindung ist jedoch nicht auf den Verzicht auf den Einsatz solcher Sensoren beschränkt. Insbesondere kann das erfindungsgemäße Verfahren auch zur Schaffung zusätzlicher Redundanz in einem bereits mit einem oder mehreren Sensoren ausgestatteten LIDAR-System realisiert werden.

Des Weiteren ist die Erfindung nicht auf das Vorhandensein einer Schutzscheibe oder auf die Nutzung einer solchen Schutzscheibe für das erfindungsgemäße Verfahren beschränkt. So können z.B. auch Hilfsflächen (welche sich wiederum in der Nähe einer ggf. vorhandenen Schutzscheibe befinden können) genutzt werden. Ferner kann im Rahmen des erfindungsgemäßen Verfahrens auch der Effekt einer durch Oberflächenbenetzung (z.B. in Folge Regenniederschlags) gestörten Totalreflexion bei geeignetem Einfallswinkel genutzt werden (wobei dieser Effekt auch zur Unterscheidung zwischen Regenniederschlag und Verschmutzung herangezogen werden kann).

Gemäß einer Ausführungsform umfasst der Schritt des Analysierens die Bestimmung der Höhe wenigstens eines Peaks in dem vorgegebenen Frequenzbereich.

Gemäß einer Ausführungsform umfasst der Schritt des Analysierens die Bestimmung der Gesamtenergie in dem vorgegebenen Frequenzbereich des Signalspektrums.

Gemäß einer Ausführungsform umfasst der Schritt des Analysierens die Ermittlung einer zeitlichen Fluktuation in dem vorgegebenen Frequenzbereich des Signalspektrums.

Gemäß einer Ausführungsform umfasst der Schritt des Modifizierens des Betriebs des LIDAR-Systems die Durchführung oder Planung einer Reinigungs- oder Abtaumaßnahme.

Gemäß einer Ausführungsform wird die Reinigungs- oder Abtaumaßnahme an einer für den von der spektral durchstimmbaren Lichtquelle ausgesandten Lichtstrahl transparenten Scheibe durchgeführt.

Gemäß einer Ausführungsform wird die durchzuführende Reinigungs- oder Abtaumaßnahme in Abhängigkeit von der ermittelten zeitlichen Fluktuation ausgewählt.

Gemäß einer Ausführungsform umfasst der Schritt des Modifizierens des Betriebs des LIDAR-Systems eine temporäre Unterbrechung des Betriebs der Lichtquelle und/oder der Abstandsermittlung.

Die Erfindung betrifft weiter auch ein LIDAR-System zur scannenden Abstandsermittlung eines Objekts, wobei das LIDAR-System wenigstens eine spektral durchstimmbare Lichtquelle zum Aussenden wenigstens eines Lichtstrahls mit zeitlich variierender Wellenlänge, und eine Auswerteeinrichtung zur Ermittlung von Abstandswerten des Objekts basierend auf Schwebungsfrequenzen von jeweils aus einer Überlagerung von aus dem Lichtstrahl hervorgegangenen, an dem Objekt reflektierten Teilsignalen mit nicht an dem Objekt reflektierten Referenzsignalen resultierenden Schwebungssignalen aufweist, wobei ein Abstandswert jeweils als Peak in einem anhand einer Fouriertransformation des Schwebungssignals erhaltenen Signalspektrum bestimmbar ist, wobei das LIDAR-System zur Durchführung eines Verfahrens mit den vorstehend beschriebenen Merkmalen ausgelegt ist.

Zu Vorteilen und bevorzugten Ausgestaltungen des LIDAR-Systems wird auf die vorstehenden Ausführungen im Zusammenhang mit dem erfindungsgemäßen Verfahren verwiesen.

Weitere Ausgestaltungen der Erfindung sind der Beschreibung sowie den Unteransprüchen zu entnehmen.

Die Erfindung wird nachstehend anhand von in den beigefügten Abbildungen dargestellten Ausführungsbeispielen näher erläutert.

KURZE BESCHREIBUNG DER ZEICHNUNGEN

Es zeigen:

Figur 1          eine schematische Darstellung zur Erläuterung eines möglichen prinzipiellen Ablaufs eines erfindungsgemäßen Verfahrens;

Figur 2a-2b      Diagramme zur weiteren Veranschaulichung des erfindungsgemäßen Verfahrens;

Figur 3          eine schematische Darstellung zur Erläuterung eines möglichen Aufbaus, mit welchem das erfindungsgemäße Verfahren realisierbar ist; und

Figuren 4a-4b    weitere schematische Darstellungen zur Erläuterung von Aufbau und Wirkungsweise eines LIDAR-Systems zur Abstandsermittlung, in welchem das erfindungsgemäße Verfahren realisierbar ist.

DETAILLIERTE BESCHREIBUNG BEVORZUGTER AUSFÜHRUNGSFORMEN

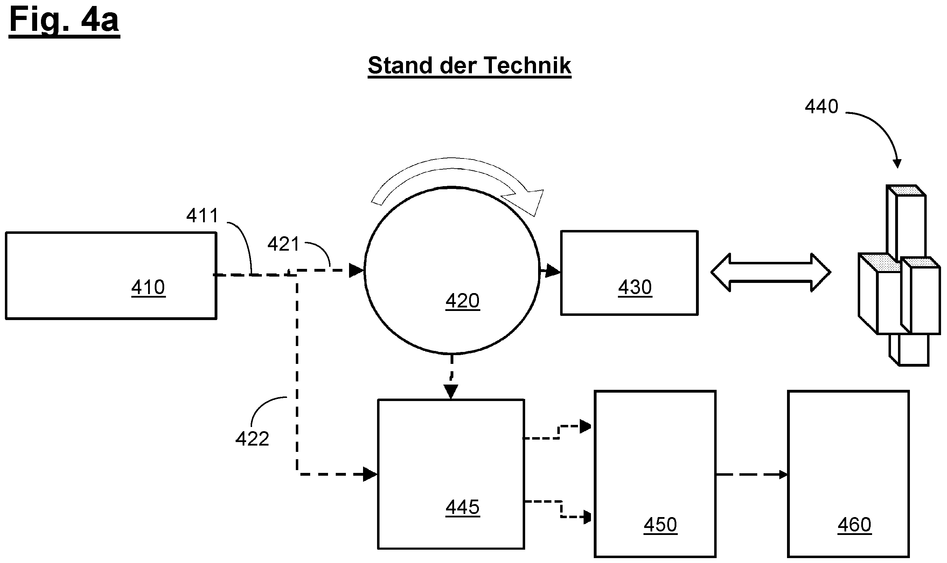

Fig. 4a zeigt zunächst lediglich in schematischer Darstellung einen für sich bekannten prinzipiellen Aufbau, in welchem ein von einer spektral durchstimmbaren Lichtquelle 410 ausgesandtes Signal 411 mit zeitlich veränderter Frequenz (auch als "Chirp" bezeichnet) in zwei Teilsignale aufgespalten wird, wobei diese Aufspaltung z.B. über einen nicht dargestellten Strahlteiler (z.B. einen teildurchlässigen Spiegel oder einen faseroptischen Splitter) erfolgt. Die beiden Teilsignale werden über einen Signalkoppler 445 gekoppelt und an einem Detektor 450 einander überlagert, wobei das erste Teilsignal als Referenzsignal 422 ohne Reflexion an dem mit "440" bezeichneten Objekt zum Signalkoppler 445 und zum Detektor 450 gelangt. Das zweite am Signalkoppler 445 bzw. am Detektor 450 eintreffende Teilsignal verläuft hingegen als Messsignal 421 über einen optischen Zirkulator 420 und einen Scanner 430 zum Objekt 440, wird von diesem zurückreflektiert und gelangt somit im Vergleich zum Referenzsignal 422 mit einer Zeitverzögerung und entsprechend veränderter Frequenz zum Signalkoppler 445 und zum Detektor 450.

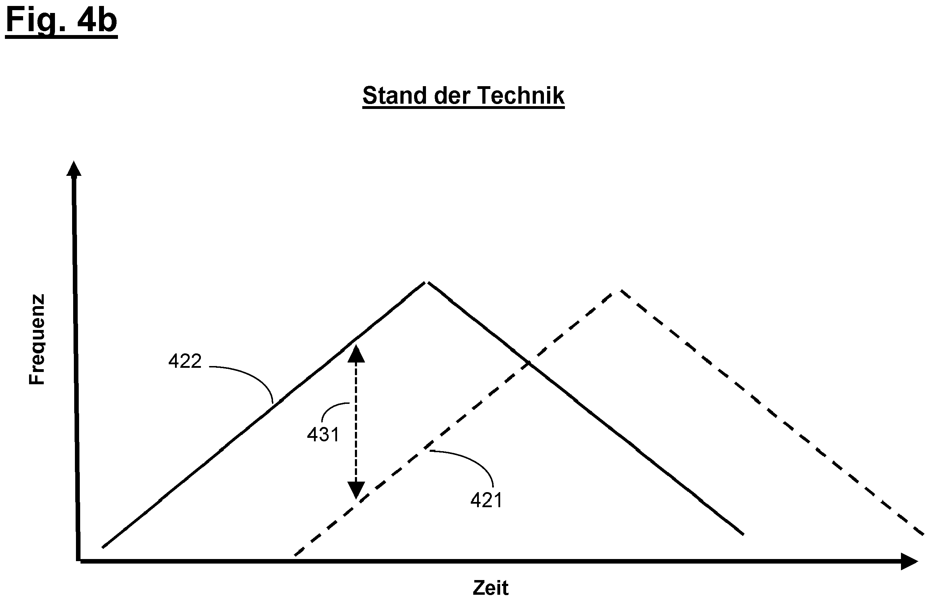

Über eine Auswerteeinrichtung 460 wird das vom Detektor 450 gelieferte Detektorsignal ausgewertet, wobei die zu einem bestimmten Zeitpunkt erfasste, im Diagramm von Fig. 4b dargestellte Differenzfrequenz 431 zwischen Messsignal 421 und Referenzsignal 422 charakteristisch für den Abstand des Objekts 440 von der Messvorrichtung bzw. der Lichtquelle 410 ist. Gemäß Fig. 4b kann dabei zum Erhalt zusätzlicher Information hinsichtlich der Relativgeschwindigkeit zwischen dem Objekt 440 und der Messvorrichtung bzw. der Lichtquelle 410 der zeitabhängige Frequenzverlauf des von der Lichtquelle 410 ausgesandten Signals 411 auch so beschaffen sein, dass zwei Abschnitte vorliegen, in denen die zeitliche Ableitung der von der Lichtquelle 410 erzeugten Frequenz zueinander entgegengesetzt ist.

Wird das von der Lichtquelle 410 ausgehende Licht in ein Referenzsignal 422 und ein Messsignal 421 aufgeteilt, die am Detektor 450 interferieren, entsteht ein entfernungsabhängiges Schwebungssignal, dessen Frequenz aus der Chirprate $\kappa$ bestimmt werden kann. Bei einem Abstand d gilt für die Schwebungsfrequenz:

$$f_{Schwebung}(d) = 2 * \kappa * d / c \qquad (1)$$

wobei $\kappa$ die Chirprate der Frequenzdurchstimmung und c die Lichtgeschwindigkeit bezeichnen.

Tritt nun gleichzeitig die Interferenz mehrerer Signale aus unterschiedlichen Entfernungen am Detektor 450 auf, so entstehen mehrere Schwebungsfrequenzen, welche durch eine Fouriertransformation des Schwebungssignals eindeutig bestimmt werden können.

Im Weiteren wird davon ausgegangen, dass das vorstehend anhand von Fig. 4a beschriebene LIDAR-System über eine Front- bzw. Schutzscheibe oder dergleichen (z.B. ein Scheinwerferglas bei Unterbringung des LIDAR-Systems im Gehäuse eines Fahrzeugscheinwerfers) gegen Umwelteinflüsse geschützt ist.

Zur Überwachung und gegebenenfalls Beseitigung von auf besagter Schutzscheibe befindlichen Verunreinigungen, witterungsbedingten Niederschlägen etc. macht sich nun die Erfindung den Umstand zunutze, dass auch entsprechende (Schmutz- oder Niederschlags-) Partikel auf der Front- bzw. Schutzscheibe grundsätzlich als Objekte angesehen werden können, welche ihrerseits in Form eines Peaks in dem anhand einer Fourier-Transformation des Schwebungssignals erhaltenen Signalspektrum nachweisbar sind.

Berücksichtigt man weiterhin, dass der entsprechende, durch besagte Partikel verursachte Peak in einem Frequenzbereich des Signalspektrums auftritt, dessen Frequenzen wesentlich (z.B. um zwei bis drei Größenordnungen) niedriger als die typischen im Straßenverkehr zu bestimmenden Objektabständen entsprechenden Frequenzen sind, kann nun erfindungsgemäß die gewünschte Verschmutzungsdiagnose über eine Analyse des Signalspektrums in dem betreffenden Bereich niedriger Frequenzen (im Weiteren als "Analysebereich Verschmutzung" bezeichnet) erfolgen.

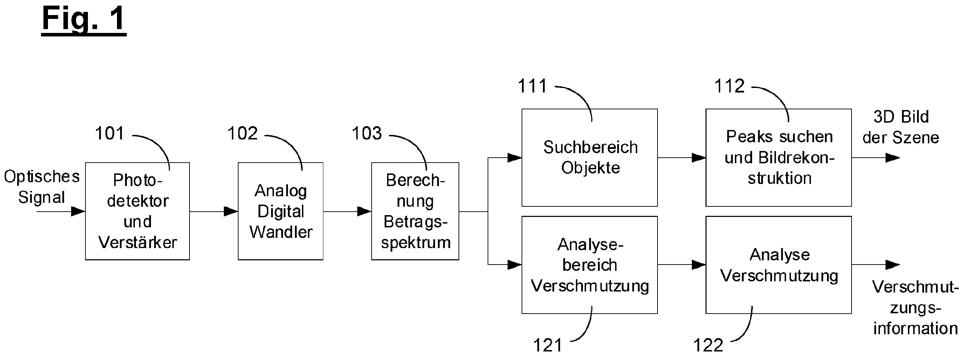

Fig. 1 zeigt eine lediglich schematische Darstellung zur Veranschaulichung des Prinzips. Gemäß Fig. 1 gelangt das wie vorstehend anhand von Fig. 4a beschrieben erzeugte Überlagerungssignal aus Mess- und Referenzsignal zunächst in eine mit "101" bezeichnete Detektor- und Verstärkereinheit und anschließend in einen Analog-Digital-Wandler 102. Aus dem von diesem Analog-Digital-Wandler 102 erzeugten Schwebungssignal wird in für sich bekannter Weise anhand einer Fourier-Transformation ein Signalspektrum berechnet (Block 103).

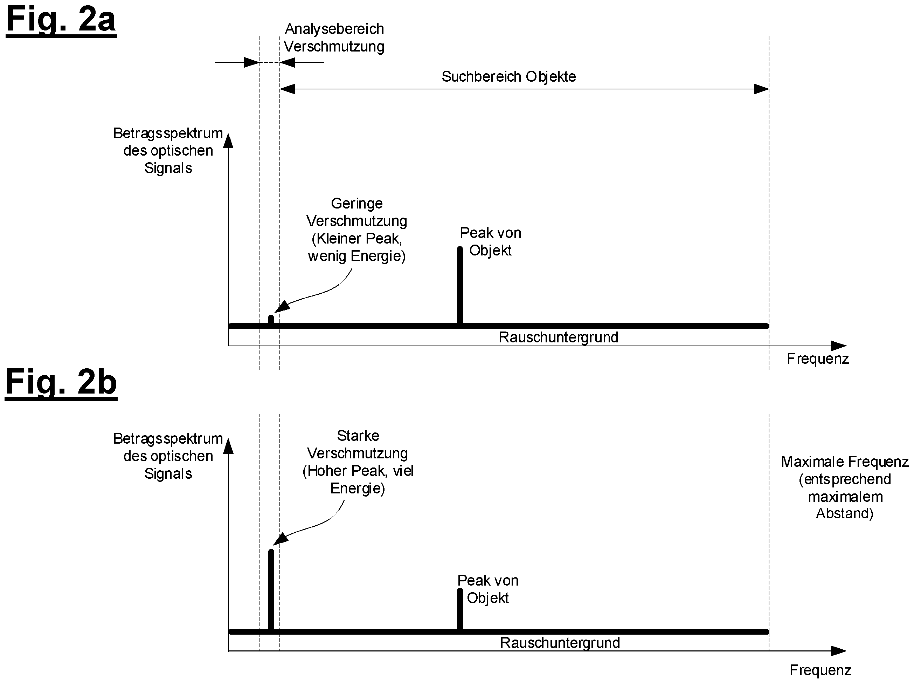

In diesem Signalspektrum wird nun - wie zusätzlich in Fig. 2a und Fig. 2b dargestellt - ein "Suchbereich Objekte" 111 von einem "Analysebereich Verschmutzung" 121 unterschieden. Dabei ist eine den Analyse-Frequenzbereich begrenzende obere Grenzfrequenz kleiner als die in dem von der Auswerteeinrichtung zur Ermittlung von Abstandswerten des Objekts ausgewerteten Signalspektrum auftretende Maximalfrequenz. In Ausführungsformen kann z.B. die den Analyse-Frequenzbereich begrenzende obere Grenzfrequenz nicht größer als 2MHz, insbesondere nicht größer als 1MHz gewählt werden. Mit anderen Worten kann der in Fig. 2a angegebene "Analysebereich Verschmutzung" 121 lediglich beispielhaft so gewählt werden, dass dieser nur Frequenzen bis zu einer maximalen Frequenz von 2 MHz, insbesondere bis zu einer maximalen Frequenz von 1 MHz, umfasst.

Des Weiteren kann der "Analysebereich Verschmutzung" 121 ebenso wie der "Suchbereich Objekte" 111 jeweils abhängig von der aktuellen Strahlrichtung gewählt werden, womit dem Umstand Rechnung getragen werden kann, dass der ausgehende Messstrahl je nach Strahl- bzw. Scanrichtung unterschiedliche Strecken bis zur Front- bzw. Schutzscheibe zurücklegt.

Die Analyse des Signalspektrums innerhalb des o.g. "Analysebereichs Verschmutzung" kann insbesondere die Bestimmung der Höhe eines in diesem Frequenzbereich erfassten Peaks umfassen. Hierbei wird davon ausgegangen, dass die Peakhöhe proportional zum Streulichtanteil und proportional zum Verschmutzungsgrad ist. Fig. 2a zeigt in nicht maßstabsgetreuer und übertriebener Darstellung beispielhafte Szenarien einer vergleichsweise geringen Verschmutzung (Fig. 2a) und einer vergleichsweise starken Verschmutzung (Fig. 2b). Mit zunehmendem Verschmutzungsgrad wird der dem hinsichtlich seines Abstandes zu vermessendem Objekt zuzuordnende Peak kleiner und der verschmutzungsbedingte, im niederfrequenten "Analysebereich Verschmutzung" auftretende Peak größer. Hier wird davon ausgegangen, dass das Strahlbündel vergleichsweise groß im Verhältnis zu auftretenden Verschmutzungen ist (wobei ein typischer Durchmesser des Strahlbündels beispielsweise 15 mm betragen kann) und die (Front- bzw. Schutz-)Scheibe in der Nähe der Austrittspupille angeordnet ist. In diesem Falle führt ein höherer Verschmutzungsgrad zu einem höheren Peak.

Alternativ oder zusätzlich kann auch die Gesamtenergie im besagten Frequenzbereich des Signalspektrums (z.B. durch Integration des quadrierten Signalpegels über den entsprechenden Frequenzbereich) bestimmt werden.

In weiteren Ausführungsformen kann zusätzlich oder alternativ auch die zeitliche Fluktuation der Peakintensität ausgewertet werden. Da diese zeitliche Fluktuation der Peakintensität etwa bei auf der Front- bzw. Schutzscheibe befindlichem Regen oder Schnee wesentlich größer ist als bei Ansammlung von Schmutzpartikeln auf der Front- bzw. Schutzscheibe, kann durch Ermittlung der zeitlichen Fluktuation der Peakintensität zwischen Regen bzw. Schnee einerseits und Verschmutzung andererseits unterschieden werden.

Sobald der wie vorstehend beschrieben ermittelte Verschmutzungsgrad ein bestimmtes Maß überschreitet, wird erfindungsgemäß automatisch der Betrieb des LIDAR-Systems modifiziert. Dies kann die Einleitung geeigneter Abhilfemaßnahmen (z.B. eine Reinigung mit Hochdruckwasser zur Beseitigung von Schmutzpartikeln oder ein Heizen zur Beseitigung von Schnee oder Eis) und/oder eine temporäre Abschaltung bzw. Betriebsunterbrechung des LIDAR-Systems umfassen.

Wenn die (Front- bzw. Schutz-)Scheibe relativ weit (z.B. mehr als 100mm bei einem Durchmesser des Strahlbündels von beispielsweise 15mm) von der Austrittspupille entfernt ist, kann ferner auch ein Winkelbereich identifiziert werden, in welchem kein ausreichendes Signal zu erwarten ist bzw. wo nicht zuverlässig gemessen werden kann. Bei kleineren Strahldurchmessern kann eine genauere Bestimmung des besagten Winkelbereichs erfolgen.

Je nach Verschmutzungsgrad können solche Abhilfemaßnahmen oder Betriebsunterbrechungen des LIDAR-Systems sofort oder auch (z.B. beim nächsten Stillstand des Fahrzeugs), ggf. auch präventiv, erfolgen.

Vorzugsweise ist besagte Schutzscheibe des LIDAR-Systems derart zu gestalten, dass über den gesamten Scanbereich kein direkter Reflex des Messsignals in den Detektor bzw. den Empfängerkanal erfolgt und lediglich von den Schmutzpartikeln bzw. dem Niederschlag ausgehendes Streulicht detektiert wird.

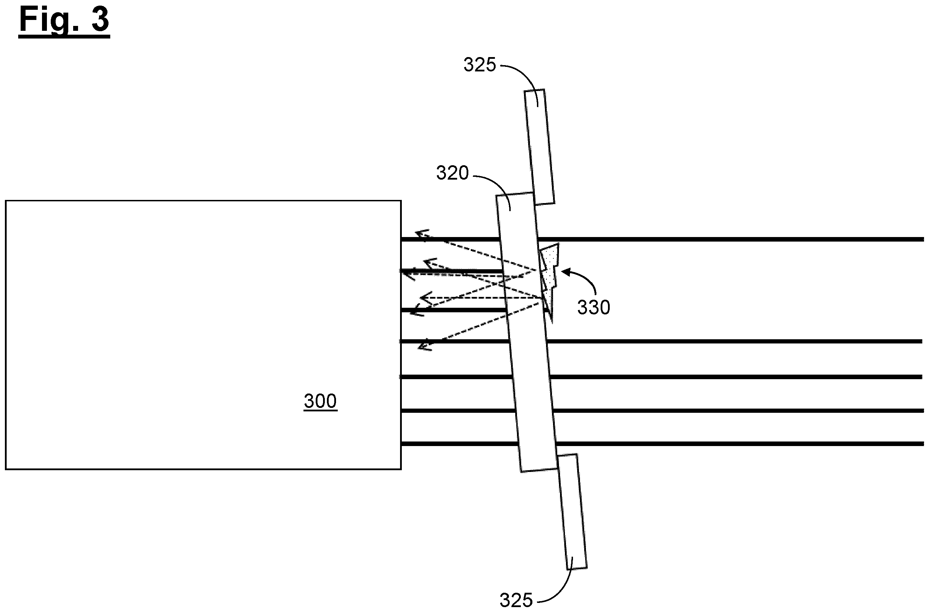

Fig. 3 zeigt eine lediglich schematische und stark vereinfachte Darstellung zur Erläuterung eines möglichen Aufbaus, mit welchem das erfindungsgemäße Verfahren realisierbar ist. Dabei ist mit "300" ein LIDAR-System, mit "320" eine für einen von der Lichtquelle des LIDAR-Systems 300 ausgesandtes Licht transparente (Schutz-) Scheibe und mit "325" eine mechanische Fassung dieser Scheibe 320 bezeichnet. Ebenfalls in Fig. 3 angedeutet und mit "330" bezeichnet sind auf der Scheibe 320 befindliche Partikel (z.B. Schmutzpartikel oder Niederschlag) sowie unterschiedliche beispielhafte (und jeweils durch gestrichelte Pfeile angegebene) Richtungen des von diesen Partikeln ausgehenden Streulichts.

Wie in Fig. 3 angedeutet kann über eine geeignete Geometrie bzw. eine Schrägstellung der Scheibe 320 relativ zum LIDAR-System 300 erreicht werden, dass in den Detektor bzw. den Empfängerkanal des LIDAR-Systems lediglich Streulicht, nicht jedoch der direkte (spekulare) Reflex des Messsignals eintritt. In weiteren Ausführungsformen kann ein auftretender direkter Reflex jedoch auch in Kauf genommen und ggf. zur Funktionskontrolle des LIDAR-Systems bzw. des Scanvorgangs genutzt werden (da der direkte Reflex im Unterschied zu einem Peak infolge Streulicht nur während des Scanbetriebs beobachtet werden kann). Des Weiteren kann auch durch eine geeignete Vergütung z.B. einer Front- bzw. Schutzscheibe die Signalstärke des direkten Reflexes im Hinblick auf den Detektor optimiert werden.

Wenn die Erfindung auch anhand spezieller Ausführungsformen beschrieben wurde, erschließen sich für den Fachmann zahlreiche Variationen und alternative Ausführungsformen, z.B. durch Kombination und/oder Austausch von Merkmalen einzelner Ausführungsformen. Dementsprechend versteht es sich für den Fachmann, dass derartige Variationen und alternative Ausführungsformen von der vorliegenden Erfindung mit umfasst sind und die Reichweite der Erfindung nur im Sinne der beigefügten Patentansprüche und deren Äquivalente beschränkt ist.

## Patentansprüche

1. Verfahren zum Betreiben eines LIDAR-Systems zur scannenden Abstandsermittlung eines Objekts, wobei das LIDAR-System aufweist:

   - wenigstens eine spektral durchstimmbare Lichtquelle (410) zum Aussenden wenigstens eines Lichtstrahls mit zeitlich variierender Frequenz; und
   - eine Auswerteeinrichtung (460) zur Ermittlung von Abstandswerten des Objekts (440) basierend auf Schwebungsfrequenzen von jeweils aus einer Überlagerung von aus dem Lichtstrahl hervorgegangenen, an dem Objekt reflektierten Teilsignalen (421) mit nicht an dem Objekt (440) reflektierten Referenzsignalen (422) resultierenden Schwebungssignalen, wobei ein Abstandswert jeweils als Peak in einem anhand einer Fouriertransformation des Schwebungssignals erhaltenen Signalspektrum bestimmbar ist;

   **dadurch gekennzeichnet, dass** das Verfahren folgende Schritte aufweist:

   a) Analysieren des Signalspektrums in einem vorgegebenen Analyse-Frequenzbereich, wobei eine diesen Analyse-Frequenzbereich begrenzende obere Grenzfrequenz kleiner als die in dem von der Auswerteeinrichtung (460) zur Ermittlung von Abstandswerten des Objekts (440) ausgewerteten Signalspektrum auftretende Maximalfrequenz ist; und
   b) Automatisches Modifizieren des Betriebs des LIDAR-Systems in Abhängigkeit von dem Ergebnis der Analyse.

2. Verfahren nach Anspruch 1, **dadurch gekennzeichnet, dass** die den Analyse-Frequenzbereich begrenzende obere Grenzfrequenz nicht größer als 2MHz, insbesondere nicht größer als 1MHz, ist.

3. Verfahren nach Anspruch 1 oder 2, **dadurch gekennzeichnet, dass** der Schritt a) des Analysierens die Bestimmung der Höhe wenigstens eines Peaks in dem vorgegebenen Frequenzbereich umfasst.

4. Verfahren nach einem der Ansprüche 1 bis 3, **dadurch gekennzeichnet, dass** der Schritt a) des Analysierens die Bestimmung der Gesamtenergie in dem vorgegebenen Frequenzbereich des Signalspektrums umfasst.

5. Verfahren nach einem der vorhergehenden Ansprüche, **dadurch gekennzeichnet, dass** der Schritt a) des Analysierens die Ermittlung einer zeitlichen Fluktuation in dem vorgegebenen Frequenzbereich des Signalspektrums umfasst.

6. Verfahren nach einem der vorhergehenden Ansprüche, **dadurch gekennzeichnet, dass** der Schritt b) des Modifizierens des Betriebs des LIDAR-Systems die Durchführung oder Planung einer Reinigungs- oder Abtaumaßnahme umfasst.

7. Verfahren nach Anspruch 6, **dadurch gekennzeichnet, dass** die Reinigungs- oder Abtaumaßnahme an einer für den von der spektral durchstimmbaren Lichtquelle ausgesandten Lichtstrahl transparenten Scheibe (320) durchgeführt wird.

**8.** Verfahren nach Anspruch 5 sowie Anspruch 6 oder 7, **dadurch gekennzeichnet, dass** die durchzuführende Reinigungs- oder Abtaumaßnahme in Abhängigkeit von der ermittelten zeitlichen Fluktuation ausgewählt wird.

**9.** Verfahren nach einem der vorhergehenden Ansprüche, **dadurch gekennzeichnet, dass** der Schritt b) des Modifizierens des Betriebs des LIDAR-Systems eine temporäre Unterbrechung des Betriebs der Lichtquelle (410) und/oder der Abstandsermittlung umfasst.

**10.** LIDAR-System zur scannenden Abstandsermittlung eines Objekts, wobei das LIDAR-System aufweist:

- wenigstens eine spektral durchstimmbare Lichtquelle (410) zum Aussenden wenigstens eines Lichtstrahls mit zeitlich variierender Wellenlänge; und
- eine Auswerteeinrichtung (460) zur Ermittlung von Abstandswerten des Objekts (440) basierend auf Schwebungsfrequenzen von jeweils aus einer Überlagerung von aus dem Lichtstrahl hervorgegangenen, an dem Objekt reflektierten Teilsignalen (421) mit nicht an dem Objekt (440) reflektierten Referenzsignalen (422) resultierenden Schwebungssignalen, wobei ein Abstandswert jeweils als Peak in einem anhand einer Fouriertransformation des Schwebungssignals erhaltenen Signalspektrum bestimmbar ist;

**dadurch gekennzeichnet, dass** das LIDAR-System zur Durchführung eines Verfahrens nach einem der vorhergehenden Ansprüche ausgelegt ist.

## Fig. 1

Optisches Signal → **101** Photodetektor und Verstärker → **102** Analog Digital Wandler → **103** Berechnung Betragsspektrum →

- **111** Suchbereich Objekte → **112** Peaks suchen und Bildrekonstruktion → 3D Bild der Szene
- **121** Analysebereich Verschmutzung → **122** Analyse Verschmutzung → Verschmutzungsinformation

EP 3 839 558 A1

## Fig. 2a

Betragsspektrum des optischen Signals

Analysebereich Verschmutzung

Suchbereich Objekte

Geringe Verschmutzung (Kleiner Peak, wenig Energie)

Peak von Objekt

Rauschuntergrund

Frequenz

## Fig. 2b

Betragsspektrum des optischen Signals

Starke Verschmutzung (Hoher Peak, viel Energie)

Peak von Objekt

Rauschuntergrund

Maximale Frequenz (entsprechend maximalem Abstand)

Frequenz

EP 3 839 558 A1

# Fig. 3

# Fig. 4a

EP 3 839 558 A1

# Fig. 4b

**Stand der Technik**

EP 3 839 558 A1

**Europäisches Patentamt**
**European Patent Office**
**Office européen des brevets**

# EUROPÄISCHER RECHERCHENBERICHT

**Nummer der Anmeldung**

EP 20 21 2617

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2015/177367 A1 (SEBASTIAN RICHARD [US] ET AL) 25. Juni 2015 (2015-06-25) * Absätze [0009] - [0020], [0025] - [0067] * * Abbildungen 1-4 * | 1-10 | INV. G01S7/497 G01S17/42 G01S17/931 |
| A | US 2018/046183 A1 (PETERS CINDY ANNE [US] ET AL) 15. Februar 2018 (2018-02-15) * Absätze [0007] - [0035] * * Abbildungen 1-4 * | 1-10 | |
| A | US 2018/188362 A1 (FUJITA JUNICHI [JP]) 5. Juli 2018 (2018-07-05) * Absätze [0007], [0008], [0025] - [0057] * * Abbildungen 1-7 * | 1-10 | |

**RECHERCHIERTE SACHGEBIETE (IPC)**

G01S

Der vorliegende Recherchenbericht wurde für alle Patentansprüche erstellt

| Recherchenort | Abschlußdatum der Recherche | Prüfer |
|---|---|---|
| München | 6. Mai 2021 | Kruck, Peter |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 21 2617

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-05-2021

| Im Recherchenbericht angeführtes Patentdokument | Datum der Veröffentlichung | Mitglied(er) der Patentfamilie | Datum der Veröffentlichung |
|---|---|---|---|
| US 2015177367 A1 | 25-06-2015 | AU 2014369003 A1 | 04-08-2016 |
| | | CA 2934515 A1 | 25-06-2015 |
| | | CN 106062583 A | 26-10-2016 |
| | | EP 3084471 A1 | 26-10-2016 |
| | | JP 2017502315 A | 19-01-2017 |
| | | JP 2021006814 A | 21-01-2021 |
| | | TW 201530178 A | 01-08-2015 |
| | | US 2015177367 A1 | 25-06-2015 |
| | | US 2018136316 A1 | 17-05-2018 |
| | | WO 2015095739 A1 | 25-06-2015 |
| US 2018046183 A1 | 15-02-2018 | CN 107765589 A | 06-03-2018 |
| | | DE 102017118538 A1 | 15-02-2018 |
| | | GB 2554536 A | 04-04-2018 |
| | | RU 2017128497 A | 11-02-2019 |
| | | US 2018046183 A1 | 15-02-2018 |
| US 2018188362 A1 | 05-07-2018 | JP 6649637 B2 | 19-02-2020 |
| | | JP WO2016208373 A1 | 12-04-2018 |
| | | US 2018188362 A1 | 05-07-2018 |
| | | WO 2016208373 A1 | 29-12-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005054497 A1
- DE 102004028860 A1